# EUROPÄISCHE PATENTSCHRIFT

(11) **EP 2 346 609 B1**
(45) Veröffentlichungstag und Bekanntmachung des Hinweises auf die Patenterteilung: **25.06.2014**
(21) Anmeldenummer: 09753105.7
(22) Anmeldetag: 16.11.2009
(51) Int. Cl.: B01L 3/02

(54) **AUTOMATISIERTE ANALYSEVORRICHTUNG MIT EINER AUTOMATISCHEN PIPETTIERVORRICHTUNG UND MIT ZWEI PUMPEINHEITEN VERSCHIEDENER KAPAZITÄTEN**
AUTOMATED ANALYSIS DEVICE WITH AN AUTOMATIC PIPETTING DEVICE AND TWO PUMP UNITS OF DIFFERENT CAPACITIES
DISPOSITIF D' ANALYSE AUTOMATISÉ COMPRENANT UN DISPOSITIF DE PIPETAGE AUTOMATISÉ ET DEUX UNITÉS DE POMPAGE DE CAPACITÉS DIFFÉRENTES

(30) Priorität: 18.11.2008 DE 102008058063
(43) Veröffentlichungstag der Anmeldung: 27.07.2011
(73) Patentinhaber: Diasys Technologies S.A.R.L., 34830 Clapiers (FR)
(72) Erfinder: SCHENK, Roland, 67281 Kirchheim (DE)
(74) Vertreter: WSL Patentanwälte Partnerschaft mbB
(86) Internationale Anmeldenummer: PCT/EP2009/065250
(87) Internationale Veröffentlichungsnummer: WO 2010/057859

(56) Entgegenhaltungen:
- US-A- 4 111 051
- US-B1- 6 805 015

## Beschreibung

Die vorliegende Erfindung betrifft eine automatische Pipettiervorrichtung für eine Vorrichtung für die automatisierte Analyse von Flüssigkeiten, wobei die Pipettiervorrichtung wenigstens zwei Pumpeinheiten verschiedener Kapazitäten und eine Flüssigkeitsleitung umfasst, wobei die Pumpeinheiten je einen Hohlraum aufweise, in dem je ein Kolben axial beweglich angeordnet ist, wobei jeder Kolben mit dem Hohlraum, in dem der Kolben angeordnet ist, eine Arbeitskammer abgrenzt, deren Volumen mit der axialen Position des Kolbens variiert, wobei die Kolben über eine Kolbenantriebsvorrichtung axial bewegt werden, wobei jede Arbeitskammer an eine Flüssigkeitsleitung angeschlossen ist, wobei die Flüssigkeitsleitung auf der einen Seite in ein Spülflüssigkeitsreservoir mündet und auf der anderen Seite in eine Pipettiernadel übergeht. Darüber hinaus betrifft die vorliegende Erfindung eine automatisierte Analysevorrichtung mit einer solchen automatischen Pipettiervorrichtung.

Im Rahmen der zunehmenden Automatisierung auf dem Gebiet der medizinischen und veterinärmedizinischen Diagnostik wurden u.a. Vorrichtungen für die automatisierte Analyse von Flüssigkeiten, sogenannte Analysatoren, entwickelt, die die verschiedenen für die Durchführung einer Analyse erforderlichen Reagenzien aus Reagenzienbehältern entnehmen und mit einer Probe zum Zwecke der Durchführung der Analyse in einem Reaktionsgefäß vereinigen können. Hierfür weisen die Analysatoren häufig ein Karussell auf, in dem entweder Aufnahmebereiche für Reagenzienbehälter oder Aufnahmebereiche für Probenbehälter vorgesehen sind. In besonderen Analysatorenkarussells sind sowohl Aufnahmebereiche für Reagenzienbehälter als auch Aufnahmebereiche für Probenbehälter vorgesehen. Solche Karussells werden üblicherweise von einer in dem Analysator vorgesehenen Antriebsvorrichtung zur Ausführung einer Drehbewebung des Karussells angetrieben.

Die Entnahme von Reagenz bzw. Probe und das Überführen in ein Reaktionsgefäß wird üblicherweise von einer automatischen Pipettiervorrichtung vorgenommen. Eine solche automatische Pipettiervorrichtung umfasst in der Regel einen Pipettierarm, an dem eine Pipettiernadel angeordnet ist, die mit einer Pumpeinheit verbunden ist, mit der eine Flüssigkeit in die Pipettiernadel aufgezogen und aus der Pipettiernadel auch wieder ausgestoßen werden kann. Ein solcher Pipettierarm ist in der Regel so ausgestaltet, dass mit dem Pipettierarm die Pipettiernadel über einen Arbeitsbereich bewegt werden kann, in welchem Arbeitsbereich die Reagenzienbehälter, Probenbehälter und/oder Reaktionsgefäße (z. B. Küvetten) stationär angeordnet sind oder durch z. B. ein Karussell vorübergehend bereitgestellt werden.

Zwischen den einzelnen Pipettiervorgängen ist es regelmäßig erforderlich, die Pipettiernadel der automatischen Pipettiervorrichtung innen und außen zu reinigen. Hierfür wird die Pipettiernadel meist in eine Spülflüssigkeit eingetaucht, wobei eine bestimmte Menge an Spülflüssigkeit in die Pipettiernadel aufgezogen wird. Anschließend wird die Pipettiernadel aus der Spülflüssigkeit ausgestoßen und über einem Abfallbehälter bzw. einem Abfluss entleert und abtropfen gelassen bzw. abgestreift.

Darüber hinaus umfassen Analysatoren oft wenigstens eine Steuerungseinheit zum Steuern der Bewegungen des Pipettierarms, der Pumpeinheit, der Pipettiernadel, der Hubsäule und/oder des Karussells, eine Messvorrichtung zum Bestimmen einer physikalischen oder chemischen Größe eines in einem Reaktionsgefäß angesetzten Reaktionsgemisches sowie eine Datenverarbeitungsvorrichtung zum Einrichten und Ausführen eines Analysenprogramms sowie zum Verarbeiten und Ausgeben einer gemessenen physikalischen oder chemischen Größe.

Wie zuvor bereits beschrieben wurde, muss die Pipettiernadel der automatischen Pipettiervorrichtung zwischen den einzelnen Pipettiervorgängen üblicherweise innen und außen gereinigt werden. Eine Möglichkeit der Reinigung besteht darin, die Pipettiernadel in eine Spülflüssigkeit einzutauchen und eine geeignete Menge an Spülflüssigkeit in die Pipettiernadel aufzuziehen. Nachdem die Pipettiernadel über einen Abfallbehälter bzw. einen Abfluss gebracht worden ist, kann dann die Spülflüssigkeit aus der Pipettiernadel ausgestoßen werden. Bei alternativen Lösungsansätzen wird die Spülflüssigkeit nicht über die Pipettiernadel aufgesogen, sondern über eine mit der Pipettiernadel verbundene Pumpeinheit, die die Spülflüssigkeit aus einem Spülflüssigkeitsreservoir ansaugen und durch die Pipettiernadel ausstoßen kann. Hierbei wird die Pipettiernadel zumindest innen gereinigt. Die Außenreinigung der Pipettiernadel kann bei diesem Ansatz entweder durch Abstreifen oder auf andere Weise erfolgen.

In beiden Fällen ist es erforderlich, dass die Pumpeinheit sowohl einen Pipettierzyklus mit in der Regel sehr geringen Volumina im Bereich von 1 µl bis 500 µl durchführen kann und auch Spülzyklen mit Volumina von etwa 1 ml bis 2 ml oder mehr an Spülflüssigkeit.

Teilweise sind in solchen Pumpvorrichtungen zwei Motorantriebe vorgesehen, wobei einer der beiden Motorantriebe zur Betätigung einer Dosierungsspritze dient, während der andere dem Antrieb einer Pumpe dient, die zur Injektion der Spülflüssigkeit bestimmt ist. Typischerweise hat die Dosierungsspritze, die für die kleinen Volumina ausgelegt ist, ein zu geringes Hubvolumen, um auch einen Spülzyklus zügig durchführen zu können.

Solche Pumpeinheiten sind konstruktiv sehr aufwendig, haben eine Vielzahl von beweglichen Verschleißteilen und nehmen in einem Analysator entsprechend viel Raum ein. Insbesondere die Antriebsmechanismen für die Spritze sind verschleißanfällig, insbesondere das Übersetzungsgetriebe, das für die Kraftübertragung von Motor auf Kolben zuständig ist.

Es besteht daher ein Bedarf nach einer automatischen Pipettiervorrichtung für einen Analysator, die weniger verschleißanfällig ist und dementsprechend eine längere Lebensdauer hat und die dennoch in der Lage ist, Pumpvorgänge mit sehr unterschiedlich großen Volumina möglichst präzise durchzuführen.

Es ist daher die Aufgabe der vorliegenden Erfindung, eine automatische Pipettiervorrichtung für einen Analysator bereitzustellen, wobei die Pipettiervorrichtung wenigstens zwei Pumpeinheiten verschiedener Kapazitäten aufweist, von denen die eine Pumpeinheit dazu in der Lage ist, einen Pipettierzyklus mit geringen Volumina im Bereich von etwa 1 µl bis 500 µl mit einer möglichst hohen Hubauflösung durchzuführen und die andere Pumpeinheit in der Lage ist, einen Spülzyklus mit Volumina im Bereich von etwa 500 bis 5.000 µl durchzuführen. Die Pumpeinheiten sollen möglichst so gestaltet sein, dass sie wenig Platz in dem Analysator einnehmen.

Diese Aufgabe wird erfindungsgemäß gelöst durch eine automatische Pipettiervorrichtung der eingangs genannten Art, bei der die Kolben der wenigstens zwei Pumpeinheiten über eine Kolbenantriebsvorrichtung synchron axial bewegt werden und wobei die Stelle, an der die größte Arbeitskammer an die Flüssigkeitsleitung angeschlossen ist, näher am Spülflüssigkeitsreservoir liegt als die Stelle, an der die Arbeitskammer der wenigstens einen anderen Pumpeinheit an die Flüssigkeitsleitung angeschlossen ist, wobei an der Flüssigkeitsleitung an der Stelle, an der die größte Arbeitskammer an die Flüssigkeitsleitung angeschlossen ist, ein 3-Wege-Ventil angeordnet ist. Sind mehrere Pumpeinheiten vorgesehen, ist die größe Pumpeinheit näher am Spülflüssigkeitsreservoir an die Flüssigkeitsleitung angeschlossen als alle anderen Pumpeinheiten.

Unter der Kapazität der Pumpen ist hier das maximale Hubvolumen zu verstehen. Dementsprechend weisen die wenigstens zwei Pumpeinheiten der erfindungsgemäßen Pipettiervorrichtung unterschiedliche maximale Hubvolumina auf.

Die automatische Pipettiervorrichtung gemäß der vorliegenden Erfindung benötigt grundsätzlich nur das eine beschriebene Ventil, das an der beschriebenen Stelle vorgesehen ist. Die vorliegende Erfindung umfasst jedoch auch solche Pipettiervorrichtungen, bei denen zwischen dem Spülflüssigkeitsreservoir und der Pipettiernadel entlang der Flüssigkeitsleitung oder entlang von mit der Flüssigkeitsleitung verbundenen Leitungen weitere Ventile angeordnet sind. Bei einer bevorzugten Ausführungsform ist an der Flüssigkeitsleitung zwischen dem Spülflüssigkeitsreservoir und der Pipettiernadel jedoch kein oder höchstens ein weiteres Ventil angeordnet.

3-Wege-Ventile sind Ventile mit drei Anschlüssen und verschiedenen Schaltstellungen. Zwei der drei Anschlüsse des Ventils sind an die Flüssigkeitsleitung angeschlossen und der dritte Anschluß ist mit der Arbeitskammer der größten Pumpeinheit verbunden. Grundsätzlich eignen sich alle dem Fachmann bekannten 3-Wege-Ventile im Zusammenhang mit der vorliegenden Erfindung. Zweckmäßigerweise handelt es sich bei den Ventilen um gesteuerte Hubventile. Besonders bevorzugt sind die verwendeten Ventile jedoch Magnetventile.

Vorzugsweise sind bei dem 3-Wege-Ventil wenigstens die Schaltungen vorgesehen, bei denen in der Flüssigkeitsleitung zwischen Spülflüssigkeitsreservoir und Pipettiernadel a) der Fluß zwischen der Stelle, an der die größte Arbeitskammer an die Flüssigkeitsleitung angeschlossen ist, und dem Spülflüssigkeitsreservoir unterbrochen ist und der Fluß zwischen der Stelle, an der die größte Arbeitskammer an die Flüssigkeitsleitung angeschlossen ist, und der Pipettiernadel möglich ist, und b) der Fluß zwischen der Stelle, an der die größte Arbeitskammer an die Flüssigkeitsleitung angeschlossen ist, und der Pipettiernadel unterbrochen ist und der Fluß zwischen der Stelle, an der die größte Arbeitskammer an die Flüssigkeitsleitung angeschlossen ist, und dem Spülflüssigkeitsreservoir möglich ist. Vorzugsweise ist das 3-Wege-Ventil ein 3/2-Wege-Ventil mit den in dem vorigen Absatz beschriebenen Schaltmöglichkeiten.

Vorzugsweise werden das 3-Wege-Ventil gemäß der vorliegenden Erfindung und ggf. höchstens ein weiteres an der Flüssigkeitsleitung vorgesehenes Ventil und die Kolbenantriebsvorrichtung über elektronische Steuerelemente gesteuert. Beispielsweise kann die Steuerung über einen Prozessor erfolgen.

Der Vorteil der vorliegenden Erfindung liegt darin, dass äußerst platzsparend zwei Pumpeinheiten verschiedener Kapazitäten in einer automatischen Pipettiervorrichtung vorgesehen sind. Die Platzersparnis ist dadurch möglich, dass die wenigstens zwei Pumpeinheiten durch eine gemeinsame Kolbenantriebsvorrichtung synchron axial bewegt werden können. Ein weiterer Vorteil der Erfindung besteht darin, dass zur Ermöglichung der abwechselnden Durchführung von Pipettier- und Spülzyklen im Bereich der Flüssigkeitsleitung grundsätzlich nur ein Ventil angeordnet sein muss. Dies wird erreicht durch die Verwendung eines 3-Wege-Ventils, das an entsprechend geeigneter Stelle angeordnet ist. Da nur ein Ventil verwendet werden muss, weist die erfindungsgemäße Pipettiervorrichtung relativ wenige bewegliche und verschleißanfällige Teile auf. Ist die Lebensdauer des einen vorgesehenen Ventils abgelaufen, braucht eben nur ein Ventil ausgetauscht werden und nicht mehrere Ventile, wie dies üblicherweise bei Pipettiervorrichtungen aus dem Stand der Technik erforderlich ist.

Bei einer bevorzugten Ausführungsform sind die Hohlräume der wenigstens zwei Pumpeinheiten in ein und demselben einstückigen Materialblock verwirklicht. Der Materialblock kann beispielsweise aus einem Plexiglaskorpus mit entsprechenden Bohrungen bestehen.

Vorzugsweise umfasst die Kolbenantriebsvorrichtung einen Motor, der ein Ritzel antreibt, welches in ein Zahnrad eingreift, das mit einem Antriebsorgan verbunden ist, welches Antriebsorgan mit dem Kolben verbunden ist. Wird das Ritzel von dem Motor in Drehung versetzt, führt dies zu einer synchronen axialen Bewegung der Kolben in den Hohlräumen der Pumpeinheiten.

Bei einer bevorzugten Ausführungsform laufen die Arbeitskammern der Pumpeinheiten in Richtung einer Anschlußleitung, die die Arbeitskammern mit der Flüssigkeitsleitung verbinden, spitz zusammen. Noch bevorzugter sind auch die in solchen Arbeitskammern angeordneten Kolben in entsprechender Weise verjüngt.

Um die Lebensdauer der Kolben möglichst groß zu halten, werden besonders bevorzugt Verdrängerkolben verwendet, die nicht gegenüber der Zylinderwand abgedichtet sind, sondern nur an der Eintrittsstelle im Zylinderboden abgedichtet sind. Bei dieser Kolbenart entspricht das Volumen eines Hubes dem Volumen des Teils des Kolbens, den dieser in der Arbeitskammer einnimmt. Da die Toleranzen bei diesen Kolben etwas größer sind, sind solche Kolben etwas kostengünstiger. Besonders bevorzugt sind die Verdrängerkolben aus Keramik oder hochlegiertem Edelstahl (z.B. Inox).

Vorzugsweise liegt das Hubvolumen der größten Pumpeinheit in dem Bereich von 500 bis 5.000 µl. Das Hubvolumen der kleinsten Pumpeinheit liegt vorzugsweise im Bereich von 50 bis 500 µl.

Das Hubvolumenverhältnis zwischen den wenigstens zwei Pumpeinheiten der Pipettiervorrichtung liegt vorzugsweise in dem Bereich von 20:1 bis 10:1. Bei besonders bevorzugten Ausführungsformen weist die Pipettiervorrichtung zwei Pumpeinheiten auf, von denen eine ein Hubvolumen von 2.250 µl und die andere ein Hubvolumen von 250 µl aufweisen. Bei einer anderen bevorzugten Ausführungsform beträgt das Hubvolumen der einen Pumpeinheit 2.375 µl und das Hubvolumen der anderen Pumpeinheit 125 µl.

Die Hubauflösung der kleinsten Pumpeinheit liegt bevorzugt im Bereich von 0,01 µl/Schritt bis 0,1 µl/Schritt. Die Hubauflösung der größten Pumpeinheit liegt vorzugsweise im Bereich von 0,5 µl/Schritt bis 2 µl/Schritt. Die erfindungsgemäße Pipettiervorrichtung kann vorteilhafterweise so betrieben werden, daß in die Arbeitskammern der Pumpeinheiten stets nur Spülflüssigkeit, wie z. B. Wasser, jedoch nie in die Pipettiernadel aufgezogene Proben- oder Reagenzienflüssigkeit gelangt.

Wie eingangs bereits erwähnt weist die erfindungsgemäße Vorrichtung mit dem beschriebenen Flüssigkeitsbehälterkarussell eines oder mehrere Elemente unter einer Antriebsvorrichtung für das Karussell, einer Pipettiervorrichtung, einer Spülstation, einer wärmeerzeugenden Vorrichtung, einer kälteerzeugenden Vorrichtung, einer optischen Messvorrichtung zum Bestimmen einer physikalischen oder chemischen Größe des Reaktionsgemisches und einer optoelektronischen Lesevorrichtung zum Lesen eines optoelektronisch lesbaren Codes, der an dem oder an den Karussells und/oder auf den Proben- und/oder Reagenzien angebracht ist.

Für Zwecke der ursprünglichen Offenbarung wird darauf hingewiesen, dass sämtliche Merkmale wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Weitere Merkmale oder Merkmalsgruppen sowie Beispiele für mögliche denkbare Merkmalskombinationen werden anhand der folgenden Beschreibung der beiliegenden Figuren offenbart bzw. veranschaulicht.

Hierbei zeigen:
- Figur 1: eine Vorrichtung für die automatisierte Analyse von Flüssigkeiten (Analysator) mit einer Pipettiervorrichtung gemäß der vorliegenden Erfindung,
- Figur 2: eine schematische Darstellung der Pumpeinheiten der erfindungsgemäßen Pipettiervorrichtung,
- Figur 3: eine schematische Darstellung der Pumpeinheiten des erfindungsgemäßen Pipettiersystems während des Pipettiervorgangs und
- Figur 4: eine schematische Darstellung der Pumpeinheiten des erfindungsgemäßen Pipettiersystems während des Spülvorgangs.

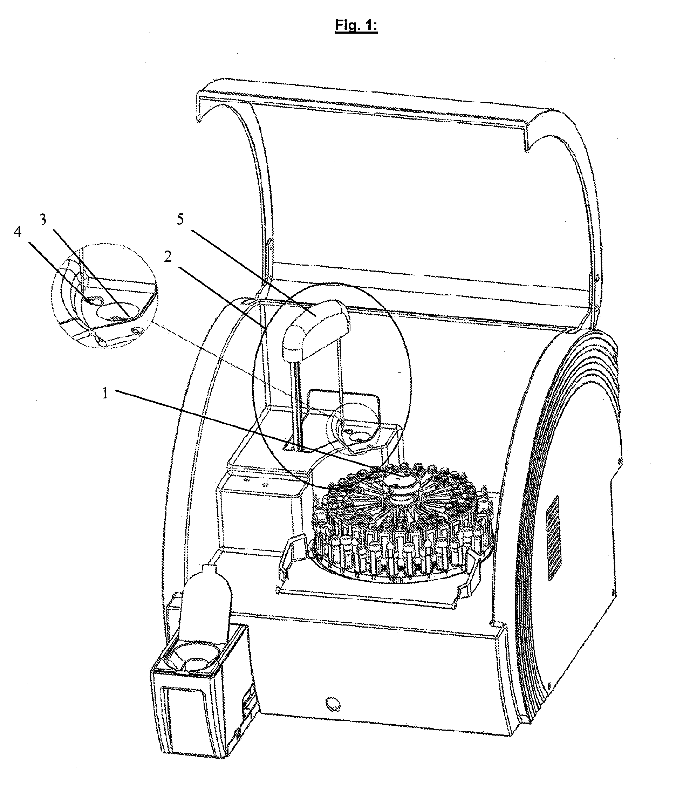

In Figur 1 ist eine Vorrichtung für die automatisierte Analyse von Flüssigkeiten (Analysator) dargestellt, die ein Karussell 1 für Flüssigkeitsbehälter und eine Pipettiervorrichtung 2 mit einem Pipettierarm 5 aufweist. Das Karussell 1 ist so angeordnet, dass es die Flüssigkeitsbehälter in den Arbeitsbereich des Pipettierarms 5 bewegen kann. Darüber hinaus ist im Arbeitsbereich des Pipettierarms 5 auch eine Spülstation 3 sowie eine Messvorrichtung 4 zum Bestimmen der exakten Position der Pipettiernadelspitze vorgesehen.

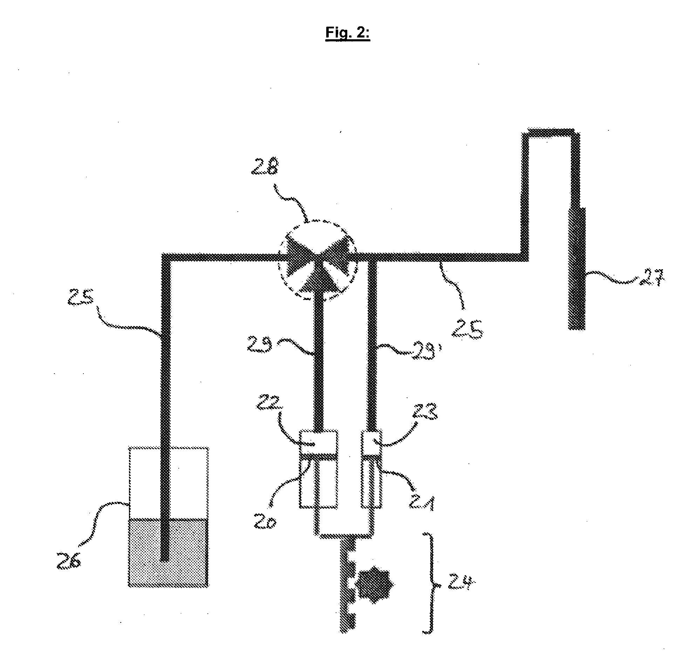

In Figur 2 ist eine schematische Darstellung eines erfindungsgemäßen Pipettiersystems mit zwei Pumpeinheiten verschiedener Kapazitäten wiedergegeben. Die Pumpeinheiten bestehen aus Kolben 20, 21, die axial in einem Hohlraum beweglich angeordnet sind. Die beiden Kolben 20, 21 grenzen im Zusammenspiel mit dem Hohlraum jeweils eine Arbeitskammer 22, 23 ab, deren Volumen mit der axialen Position des Kolbens 20, 21 variiert. Der linke Kolben 20 ist ein großer Kolben, der sich in einem entsprechend großen Hohlraum bewegt und mit diesem eine entsprechend große Arbeitskammer 22 abgrenzt. Der rechte Kolben 21 ist ein kleiner Kolben, der in einem entsprechend kleinen Hohlraum eine entsprechend kleine Arbeitskammer 23 abgrenzt. Die beiden Kolben 20, 21 werden über einen Kolbenantriebsvorrichtung 24 synchron axial bewegt. Die beiden Arbeitskammern 22, 23 sind über Anschlussleitungen 29, 29' an eine Flüssigkeitsleitung 25 angeschlossen. Die Flüssigkeitsleitung 25 mündet auf ihrer einen Seite in ein Spülflüssigkeitsreservoir 26. Auf der anderen Seite geht die Flüssigkeitsleitung 25 in eine Pipettiernadel 27 über.

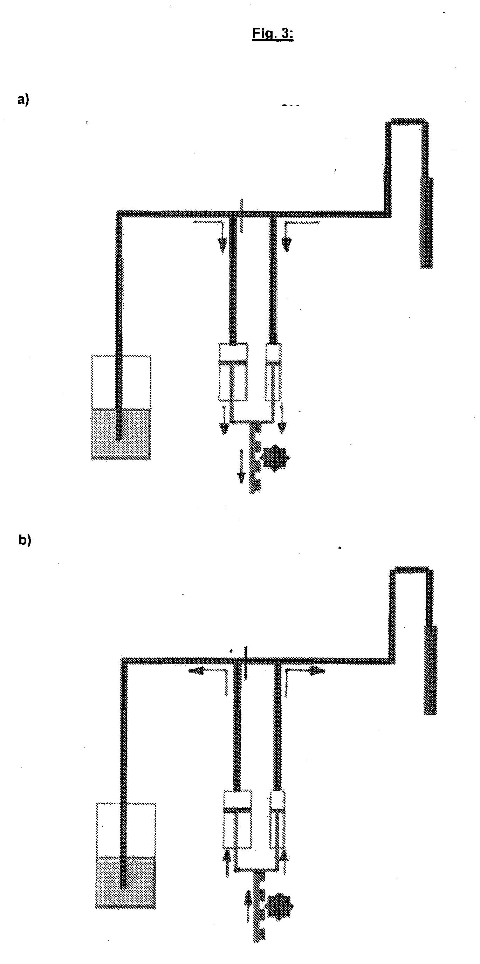

Die Stelle, an der die größere Arbeitskammer 22 an die Flüssigkeitsleitung 25 angeschlossen ist, liegt näher am Spülflüssigkeitsreservoir 26 als die Stelle, an der die kleinere Arbeitskammer 23 an die Flüssigkeitsleitung 25 angeschlossen ist. Außerdem ist an der Stelle, an der die größere Arbeitskammer 22 an die Flüssigkeitsleitung 25 angeschlossen ist, ein 3/2-Wege-Ventil 28 angeordnet. In den Figuren 3a) und b) sind die Kolbenbewegungen und die Fließrichtungen der Flüssigkeiten in den Flüssigkeitsleitungen bei einem Pipettiervorgang wiedergegeben. In Figur 3a) ist zu erkennen, dass die Kolbenantriebsvorrichtung eine Bewegung ausführt, die dazu führt, dass sich die beiden Kolben nach unten bewegen. Entsprechend wird das Volumen der Arbeitskammern vergrößert, was dazu führt, dass über die Anschlussleitungen Flüssigkeit in die Arbeitskammern gezogen wird.

Das 3-Wege-Ventil ist in dieser Phase des Pipettiervorgangs so geschaltet, dass in der Flüssigkeitsleitung zwischen Spülflüssigkeitsreservoir und Pipettiernadel der Fluß zwischen der Stelle, an der die größte Arbeitskammer an die Flüssigkeitsleitung angeschlossen ist, und der Pipettiernadel unterbrochen ist und der Fluß zwischen der Stelle, an der die größte Arbeitskammer an die Flüssigkeitsleitung angeschlossen ist, und dem Spülflüssigkeitsreservoir möglich ist. Bewegt sich der größere Kolben nach unten und vergrößert damit das Volumen der größeren Arbeitskammer, wird somit in die größere Arbeitskammer lediglich Spülflüssigkeit aus dem Zweig der Flüssigkeitsleitung, die zwischen der größeren Arbeitskammer und dem Spülflüssigkeitsreservoir liegt, eingezogen. Auf der anderen Seite wird durch die Vergrößerung des Volumens der kleineren Arbeitskammer die Flüssigkeit in dem Zweig der Flüssigkeitsleitung, die zwischen der Stelle, an der die kleinere Arbeitskammer mit der Flüssigkeitsleitung verbunden ist, und der Pipettiernadel liegt, Flüssigkeit in die kleinere Arbeitskammer eingezogen, was ermöglicht, dass ein entsprechendes Volumen einer Probe oder eines Reagenz in die Pipettiernadel aufgezogen werden kann.

Bei der zweiten, in Figur 3b) dargestellten Phase de Pipettiervorgangs bleibt das Ventil in der für Figur 3a) beschriebenen Position. Dagegen bewegt sich die Kolbenantriebsvorrichtung in umgekehrter Richtung, so dass sich der große und der kleine Kolben synchron in Richtung der Flüssigkeitsaustrittsöffnungen, in die die Arbeitskammern münden, bewegen, wobei die entsprechenden Arbeitskammern der beiden Pumpeinheiten verkleinert werden, was im Falle der großen Arbeitskammer dazu führt, dass die in dieser Arbeitskammer befindliche Spülflüssigkeit wieder in Richtung des Spülflüssigkeitsreservoirs gepumpt wird. Auf der anderen Seite der Flüssigkeitsleitung wird aus der Pipettiernadel ein Volumen an Probe bzw. Reagenz ausgestoßen, das dem Volumen entspricht, um welches das Volumen der kleineren Arbeitskammer verringert wird.

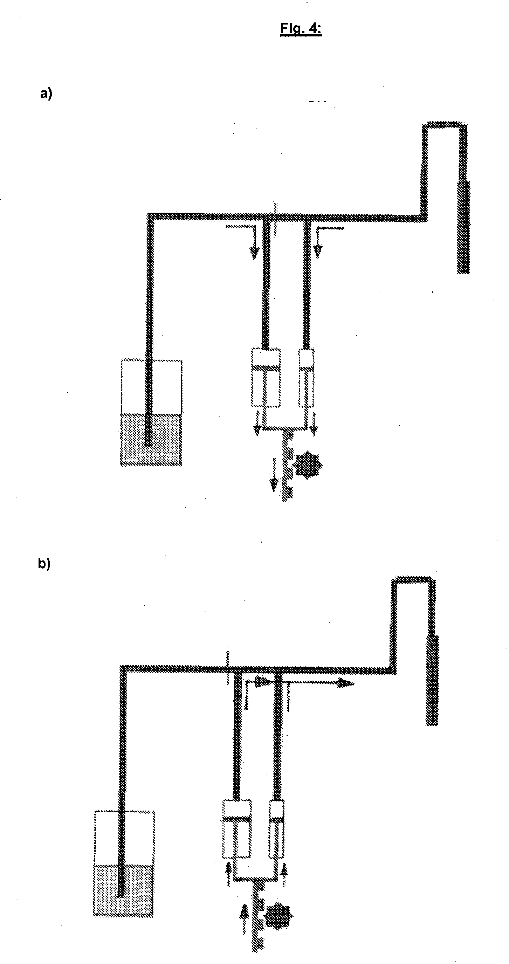

In den Figuren 4a) und 4b) sind die Vorgänge wiedergegeben, die bei einem Spülvorgang stattfinden. In der Phase, die in Figur 4a) dargestellt ist, werden die Kolben synchron nach unten bewegt. Die Stellung des Ventils entspricht der Stellung, die auch für die Figuren 3a) und 3b) beschrieben wurde. Dementsprechend wird durch die Bewegung der Kolben nach unten auch hier Spülflüssigkeit aus dem Spülflüssigkeitsreservoir in die linke Arbeitskammer eingesogen und Spülflüssigkeit aus dem rechten Zweig der Flüssigkeitsleitung in die kleinere Arbeitskammer.

In der zweiten Phase des Spülvorgangs, die in Figur 4b) wiedergegeben ist, weicht die Stellung des Ventils von der bisher beschriebenen Stellung des Ventils ab. In dieser Phase ist das Ventil so geschaltet, dass in der Flüssigkeitsleitung zwischen Spülflüssigkeitsreservoir und Pipettiernadel der Fluß zwischen der Stelle, an der die größte Arbeitskammer an die Flüssigkeitsleitung angeschlossen ist, und dem Spülflüssigkeitsreservoir unterbrochen ist und der Fluß zwischen der Stelle, an der die größte Arbeitskammer an die Flüssigkeitsleitung angeschlossen ist, und der Pipettiernadel möglich ist. Bewegen sich nun die beiden Kolben nach oben wird aus den beiden Arbeitskammern Spülflüssigkeit durch den Zweig der Flüssigkeitsleitung, der in Richtung Pipettiernadel verläuft, gepumpt und durch die Pipettiernadelöffnung ausgestoßen. Bei einem geeigneten Volumen der größeren Arbeitskammer und entsprechendem Volumen der Flüssigkeitsleitung zwischen der größeren Arbeitskammer und der Spitze der Pipettiernadel kann auf diese Weise die Pipettiernadel vollständig gespült werden.

Bei allen Pipettiervorgängen ist darauf zu achten, dass zwischen dem in die Pipettiernadel aufgezogenen Volumen an Reagenz oder Probe und der in der Flüssigkeitsleitung 25 befindlichen Spülflüssigkeit stets eine ausreichend große Luftblase vorhanden ist, damit die in die Pipettiernadel aufgezogene Flüssigkeit nicht mit der in der Flüssigkeitsleitung enthaltenen Spülflüssigkeit in Kontakt treten kann. Hierzu wird nach jedem Spülvorgang in die Pipettiernadel etwas Umgebungsluft aufgezogen und erst dann Probe oder Reagenz aufgenommen.

### Bezugszeichen

- 1: Karussell für Flüssigkeitsbehälter
- 2: Pipettiervorrichtung
- 3: Spülstation
- 4: Meßvorrichtung für Kapazitätsmessung
- 5: Pipettierarm
- 20: großer Kolben
- 21: kleiner Kolben
- 22: große Arbeitskammer
- 23: kleine Arbeitskammer
- 24: Kolbenantriebsvorrichtung
- 25: Flüssigkeitsleitung
- 26: Spülflüssigkeitsreservoir
- 27: Pipettiernadel
- 28: 3-Wege-Ventil
- 29: Anschlussleitung

## Patentansprüche

1. Automatische Pipettiervorrichtung (2) für eine Vorrichtung für die automatisierte Analyse von Flüssigkeiten, wobei die Pipettiervorrichtung (2) wenigstens zwei Pumpeinheiten verschiedener Kapazitäten und eine Flüssigkeitsleitung umfasst, wobei die Pumpeinheiten je einen Hohlraum aufweisen, in dem je ein Kolben (20, 21) axial beweglich angeordnet ist, wobei jeder Kolben (20, 21) mit dem Hohlraum, in dem der Kolben (20, 21) angeordnet ist, eine Arbeitskammer (22, 23) abgrenzt, deren Volumen mit der axialen Position des Kolbens (20, 21) variiert, wobei die Kolben (20, 21) über eine Kolbenantriebsvorrichtung (24) synchron axial bewegt werden, wobei jede Arbeitskammer (22, 23) an eine Flüssigkeitsleitung (25) angeschlossen ist, welche Flüssigkeitsleitung (25) auf der einen Seite in ein Spülflüssigkeitsreservoir (26) mündet und auf der anderen Seite in eine Pipettiernadel (27) übergeht, wobei die Stelle, an der die größte Arbeitskammer (22) an die Flüssigkeitsleitung (25) angeschlossen ist, näher am Spülflüssigkeitsreservoir (26) liegt als die Stelle, an der die Arbeitskammer (23) der wenigstens einen anderen Pumpeinheit an die Flüssigkeitsleitung (25) angeschlossen ist, wobei an der Flüssigkeitsleitung (25) an der Stelle, an der die größte Arbeitskammer (22) an die Flüssigkeitsleitung (25) angeschlossen ist, ein 3-Wege-Ventil (28) angeordnet ist.

2. Pipettiervorrichtung (2) nach Anspruch 1, **dadurch gekennzeichnet, dass** das 3-Wege-Ventil ein 3/2-Wege-Ventil ist.

3. Pipettiervorrichtung (2) nach einem der Ansprüche 1 oder 2, **dadurch gekennzeichnet, dass** an der Flüssigkeitsleitung (25) zwischen dem Spülflüssigkeitsreservoir (26) und der Pipettiernadel (27) kein Ventil oder höchstens ein weiteres Ventil angeordnet ist

4. Pipettiervorrichtung (2) nach einem der Ansprüche 1 bis 3, **dadurch gekennzeichnet, dass** das 3-Wege-Ventil (28) und gegebenenfalls das höchstens eine weitere Ventil und die Kolbenantriebsvorrichtung (24) über elektronische Steuerelemente gesteuert werden.

5. Pipettiervorrichtung (2) nach einem der Ansprüche 1 bis 4, **dadurch gekennzeichnet, dass** die Hohlräume der wenigstens zwei Pumpeinheiten in dem selben einstückigen Materialblock verwirklicht sind.

6. Pipettiervorrichtung (2) nach einem der Ansprüche 1 bis 5, **dadurch gekennzeichnet, dass** die Kolbenantriebsvorrichtung einen Motor umfasst, der ein Ritzel antreibt, der kraftschlüssig in eine Zahnstange eines Antriebsorgans eingreift, welches Antriebsorgan mit den Kolben (20, 21) verbunden ist, wobei eine Bewegung des Ritzels zu einer synchronen axialen Bewegung der Kolben (20, 21) in den Hohlräumen der Pumpeinheiten führt.

7. Pipettiervorrichtung (2) nach einem der Ansprüche 1 bis 5, **dadurch gekennzeichnet, dass** das obere Ende wenigstens eines der Hohlräume und/oder das obere Ende wenigstens eines der Kolben nach oben hin spitz zusammenläuft, wobei dieses obere Ende des Hohlraums in eine Anschlussleitung (29), die den Hohlraum mit der Flüssigkeitsleitung (25) verbindet, mündet.

8. Pipettiervorrichtung (2) nach einem der Ansprüche 1 bis 7, **dadurch gekennzeichnet, dass** das Hubvolumen der größten Pumpeinheit im Bereich von 500 bis 5000 µl liegt und/oder das Hubvolumen der kleinsten Pumpeinheit im Bereich von 50 bis 500 µl liegt.

9. Pipettiervorrichtung (2) nach einem der Ansprüche 1 bis 8, **dadurch gekennzeichnet, dass** die Pipettiervorrichtung (2) zwei Pumpeinheiten mit einem Hubvolumenverhältnis in dem Bereich von 20:1 bis 10:1 aufweist.

10. Pipettiervorrichtung (2) nach einem der Ansprüche 1 bis 9, **dadurch gekennzeichnet, dass** die Hubauflösung der kleinsten Pumpeinheit im Bereich von 0,01 µl/Schritt bis 0,1 µl/Schritt liegt und/oder die Hubauflösung der größten Pumpeinheit im Bereich von 0,5 µl/Schritt bis 2 µl/Schritt liegt.

11. Automatisierte Analysevorrichtung mit einer Pipettiervorrichtung (2) nach einem der Ansprüche Anspruch 1 bis 9 und mit einem oder mehreren Elementen unter einem Analyserotor, einer Spülstation, einer Wärme erzeugenden Vorrichtung, einer Kälte erzeugenden Vorrichtung, einer optischen Messvorrichtung und einer optoelektronischen Lesevorrichtung zum lesen eines optoelektronisch lesbaren Codes.

## Claims

1. Automatic pipetting device (2) for a device for the automated analysis of liquids, wherein the pipetting device (2) comprises at least two pumping units of different capacities and a liquid line, wherein the pumping units each have a cavity, in each of which a piston (20, 21) is arranged axially movable, wherein each piston (20, 21) delimits, with the cavity in which the piston (20, 21) is arranged, a working chamber (22, 23), whose volume varies with the axial position of the piston (20, 21), wherein the pistons (20, 21) are moved axially synchronously by a piston drive device (24), wherein each working chamber (22, 23) is connected to a liquid line (25), and on one side said liquid line (25) opens into a rinsing liquid reservoir (26) and on the other side merges into a pipetting needle (27), wherein the point at which the largest working chamber (22) is connected to the liquid line (25) is closer to the rinsing liquid reservoir (26) than the point at which the working chamber (23) of the at least one other pumping unit is connected to the liquid line (25), wherein a 3-way valve (28) is arranged on the liquid line (25) at the point at which the largest working chamber (22) is connected to the liquid line (25).

2. Pipetting device (2) according to claim 1, **characterized in that** the 3-way valve is a 3/2-way valve.

3. Pipetting device (2) according to one of claims 1 or 2, **characterized in that** no valve or at most one other valve is arranged on the liquid line (25) between the rinsing liquid reservoir (26) and the pipetting needle (27).

4. Pipetting device (2) according to one of claims 1 to 3, **characterized in that** the 3-way valve (28) and optionally the at most one other valve and the piston drive device (24) are controlled by electronic control elements.

5. Pipetting device (2) according to one of claims 1 to 4, **characterized in that** the cavities of the at least two pumping units are made in the same single-piece block of material.

6. Pipetting device (2) according to one of claims 1 to 5, **characterized in that** the piston drive device comprises a motor, which drives a pinion, which engages non-positively in a rack of a driving element, said driving element being connected to the pistons (20, 21), wherein a movement of the piston leads to a synchronous axial movement of the pistons (20, 21) in the cavities of the pumping units.

7. Pipetting device (2) according to one of claims 1 to 5, **characterized in that** the upper end of at least one of the cavities and/or the upper end of at least one of the pistons converge upwards, wherein this upper end of the cavity opens into a connecting line (29), which connects the cavity to the liquid line (25).

8. Pipetting device (2) according to one of claims 1 to 7, **characterized in that** the piston displacement of the largest pumping unit is in the range from 500 to 5000 µl and/or the piston displacement of the smallest pumping unit is in the range from 50 to 500 µl.

9. Pipetting device (2) according to one of claims 1 to 8, **characterized in that** the pipetting device (2) has two pumping units with a piston displacement ratio in the range from 20:1 to 10:1.

10. Pipetting device (2) according to one of claims 1 to 9, **characterized in that** the stroke resolution of the smallest pumping unit is in the range from 0.01 µl/step to 0.1 µl/step and/or the stroke resolution of the largest pumping unit is in the range from 0.5 µl/step to 2 µl/step.

11. Automated analysis device with a pipetting device (2) according to one of claims 1 to 9 and with one or more of the following elements: an analysis rotor, a rinsing station, a device producing heat, a device producing cold, an optical measuring device and an optoelectronic reading device for reading an optoelectronically readable code.

## Revendications

1. Dispositif de pipetage (2) automatisé pour dispositif destiné à l'analyse automatisée de liquides, dans lequel le dispositif de pipetage (2) comprend au moins deux unités à pompe de capacité différente et une conduite de liquide, dans lequel les unités à pompe présentent respectivement un espace creux dans lequel est disposé respectivement un piston (20, 21) mobile dans la direction axiale, dans lequel chaque piston (20, 21) délimite par l'espace creux dans lequel est disposé le piston (20, 21) une chambre de travail (22, 23) dont le volume varie avec la position axiale du piston (20, 21), dans lequel les pistons (20, 21) sont déplacés axialement de façon synchrone par l'intermédiaire d'un dispositif d'entraînement de piston (24), dans lequel chaque chambre de travail (22, 23) est raccordée à une conduite de liquide (25), laquelle conduite de liquide (25) sur un côté débouche dans un réservoir de liquide de rinçage (26) et sur l'autre côté passe dans une aiguille de pipetage (27), dans lequel l'endroit où la plus grande chambre de travail (22) se raccorde à la conduite de liquide (25) est plus proche du réservoir de liquide de rinçage (26) que l'endroit où la chambre de travail (23) de l'autre unité à pompe, au moins au nombre de une, se raccorde à la conduite de liquide (25), dans lequel une soupape à trois voies (28) est disposée au niveau de la conduite de liquide (25) à l'endroit où la plus grande chambre de travail (22) se raccorde à la conduite de liquide (25).

2. Dispositif de pipetage (2) selon la revendication 1, **caractérisé en ce que** la soupape à trois voies est une soupape à 3/2 voies.

3. Dispositif de pipetage (2) selon l'une des revendications 1 ou 2, **caractérisé en ce qu'**au niveau de la conduite de liquide (25), entre le réservoir de liquide de rinçage (26) et l'aiguille de pipetage (27) n'est disposée aucune soupape ou est disposée au plus une autre soupape.

4. Dispositif de pipetage (2) selon l'une des revendications 1 à 3, **caractérisé en ce que** la soupape à trois voies (28) et éventuellement l'autre soupape, au plus au nombre de une, et le dispositif d'entraînement de piston (24) sont commandés par le biais d'éléments électroniques de commande.

5. Dispositif de pipetage (2) selon l'une des revendications 1 à 4, **caractérisé en ce que** les espaces creux des unités à pompe, au moins au nombre de deux, sont réalisés dans le même bloc de matériau monobloc.

6. Dispositif de pipetage (2) selon l'une des revendications 1 à 5, **caractérisé en ce que** le dispositif d'entraînement de piston comporte un moteur qui entraîne un pignon qui s'insère par friction dans une tige dentée d'un organe d'entraînement, lequel organe d'entraînement est relié aux pistons (20, 21), où un déplacement du pignon génère un déplacement axial synchrone des pistons (20, 21) dans les espaces creux des unités à pompe.

7. Dispositif de pipetage (2) selon l'une des revendications 1 à 5, **caractérisé en ce que** l'extrémité supérieure d'au moins un des espaces creux et/ou l'extrémité supérieure d'au moins un des pistons converge(nt) en pointe vers le haut, cette extrémité supérieure de l'espace creux débouchant dans une conduite de raccordement (29) qui relie l'espace creux à la conduite de liquide (25).

8. Dispositif de pipetage (2) selon l'une des revendications 1 à 7, **caractérisé en ce que** le volume engendré de la plus grande unité à pompe est compris dans la plage de 500 à 5000 µl et/ou **en ce que** le volume engendré de la plus petite unité à pompe est compris dans la plage de 50 à 500 µl.

9. Dispositif de pipetage (2) selon l'une des revendications 1 à 8, **caractérisé en ce que** le dispositif de pipetage (2) présente deux unités à pompe ayant un rapport de volume engendré dans la plage de 20:1 à 10:1.

10. Dispositif de pipetage (2) selon l'une des revendications 1 à 9, **caractérisé en ce que** la résolution de course de la plus petite unité à pompe est comprise dans la plage de 0,01 µl/incrément à 0,1 µl/incrément et/ou **en ce que** la résolution de course de la plus grande unité à pompe est comprise dans la plage de 0,5 µl/incrément à 2 µl/incrément.

11. Dispositif d'analyse automatisé comportant un dispositif de pipetage (2) selon l'une des revendications 1 à 9 et comportant un ou plusieurs éléments parmi un rotor d'analyse, une station de rinçage, un dispositif générant de la chaleur, un dispositif générant du froid, un dispositif optique de mesure et un dispositif de lecture optoélectronique permettant de lire un code lisible par voie optoélectronique.
